# EUROPEAN PATENT APPLICATION

(11) **EP 4 645 721 A1**
(43) Date of publication of application: **05.11.2025**
(21) Application number: 22969831.1
(22) Date of filing: 30.12.2022
(51) Int. Cl.: H04L 1/00

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: LI, Dexin, Dongguan, Guangdong 523860 (CN)
(74) Representative: Penza, Giancarlo
(86) International application number: PCT/CN2022/144162
(87) International publication number: WO 2024/138689

(57) **Abstract**

Provided are a wireless communication method and a communication device. The method includes: sending first information by a first device to a second device, the first information being used for indicating the number of feedback bits of first CSI. In embodiments of the present application, according to the first information, the first device can indicate the number of feedback bits of the first CSI to the second device, so that the second device can select an appropriate decoding model on the basis of the number of feedback bits. In this way, the first device can select an appropriate number of feedback bits for different CSIs, thereby avoiding the waste of CSI feedback resources while ensuring the CSI recovery accuracy.

## Description

### TECHNICAL FIELD

The present disclosure relates to the technical field of communications, and more particularly to a method for wireless communication and a communication device.

### BACKGROUND

In a Channel State Information (CSI) (or Channel State Information-Reference Signal) feedback process, CSI can be compressed using an encoding model, and the compressed CSI can be recovered by a decoding model. At present, complexity of the CSI directly affects performance of the encoding model and/or decoding model. Generally, under a combined influence of a complex wireless environment and a system factor, the CSI presents rich diversity. Different CSIs carry different amounts of information, and some CSIs have higher intersubband correlations, which are relatively easy to be compressed and have higher decoding accuracy. However, some CSIs have lower intersubband correlations and carry a larger amount of information. In this case, if the CSIs with the lower intersubband correlations are fed back using the same number of feedback bits as the CSIs with the higher intersubband correlation, it may result in a decrease in recovery accuracy of the CSIs, or result in a large number of feedback bits, causing waste of resources.

### SUMMARY

The present disclosure provides a method for wireless communication and a communication device. The various aspects involved in the embodiments of the present disclosure are introduced below.

In a first aspect, a method for wireless communication is provided, and the method includes the following operations. A first device sends first information to a second device, and the first information indicates the number of feedback bits for first CSI.

In a second aspect, a method for wireless communication is provided, and the method includes the following the following operations. A second device receives first information from a first device, and the first information indicates the number of feedback bits for first CSI.

In a third aspect, a communication apparatus is provided, the communication apparatus is a first device, and includes a sending unit. The sending unit is configured send first information to a second device, and the first information indicates the number of feedback bits for first CSI.

In a fourth aspect, a communication apparatus is provided, the communication apparatus is a second device, and includes a receiving unit. The receiving unit is configured to receive first information from a first device, and the first information indicates the number of feedback bits for first CSI.

In a fifth aspect, a communication device is provided, and the communication device includes a transceiver, a memory, and a processor. The memory is configured to store a program, and a processor is configured to call the program from the memory and control the transceiver to receive or transmit signals to cause a terminal to perform the method in any of the above aspects.

In a sixth aspect, an apparatus is provided, and the apparatus includes a processor. The processor is configured to call a program from a memory to cause the apparatus to perform the method in any of the above aspects.

In a seventh aspect, a chip is provided, and the chip includes a processor. The processor is configured to call a program from a memory to cause a device equipped with the chip to perform the method in any of the above aspects.

In an eighth aspect, a computer-readable storage medium is provided, which has stored a program to cause a computer to perform the method in any of the above aspects.

In a ninth aspect, a computer program product is provided, which includes a program to cause a computer to perform the method in any of the above aspects.

In a tenth aspect, a computer program is provided, causing a computer to perform the method in any of the above aspects.

In the embodiments of the present disclosure, the first device may indicate the number of feedback bits for the first CSI to the second device through the first information, so that the second device can select an appropriate decoding model for decoding based on the number of feedback bits for the first CSI. In this way, the first device can select an appropriate number of feedback bits for different CSIs, which is beneficial to avoid waste of CSI feedback resources while ensuring recovery accuracy of the CSI.

### BRIEF DESCRIPTION OF THE DRAWINGS

FIG. 1 illustrates a wireless communication system 100 applied in an embodiment of the present disclosure.
FIG. 2 illustrates a CSI feedback system based on an autoencoder.
FIG. 3 is a schematic diagram illustrating a neural network to which an embodiment of the present disclosure is applicable.
FIG. 4 is a schematic diagram illustrating a Convolutional Neural Network (CNN) to which an embodiment of the present disclosure is applicable.
FIG. 5 is a schematic diagram illustrating visualization results of four different original CSIs according to an embodiment of the present disclosure.
FIG. 6 is a flowchart illustrating a method for wireless communication according to an embodiment of the present disclosure.
FIG. 7 is a schematic diagram illustrating a CSI feedback process according to another embodiment of the present disclosure.
FIG. 8 is a flowchart illustrating a method for wireless communication according to a first embodiment of the present disclosure.
FIG. 9 is a flowchart illustrating a method for wireless communication according to a second embodiment of the present disclosure.
FIG. 10 is a flowchart illustrating a method for wireless communication according to a third embodiment of the present disclosure.
FIG. 11 is a schematic diagram illustrating a communication apparatus according to an embodiment of the present disclosure.
FIG. 12 is a schematic diagram illustrating a communication apparatus according to another embodiment of the present disclosure.
FIG. 13 is a schematic structural diagram of an apparatus according to an embodiment of the present disclosure.

### DETAILED DESCRIPTION

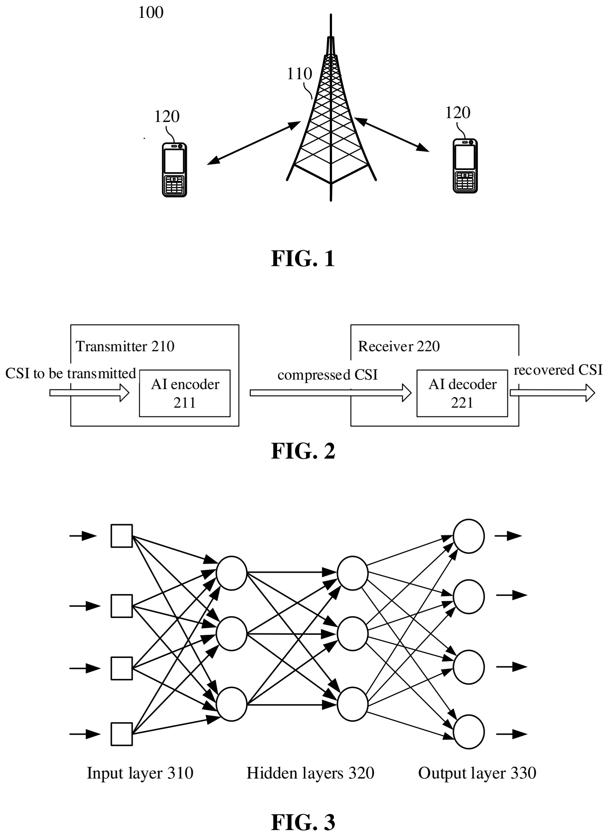

Technical solutions in the present disclosure will be described below with reference to the drawings. To facilitate understanding of the present disclosure, terms and communication processes involved in the embodiments of the present disclosure are introduced below with reference to FIG. 1 to FIG. 5.

FIG. 1 illustrates a wireless communication system 100 applied in an embodiment of the present disclosure. The wireless communications system 100 may include a network device 110 and a terminal device 120. The network device 110 may be a device that communicates with the terminal device 120. The network device 110 may provide communication coverage for a specific geographic area, and may communicate with the terminal device 120 located in the coverage.

FIG. 1 exemplarily illustrates one network device and two terminals. Alternatively, the wireless communications system 100 may include multiple network devices, and the coverage area of each network device may include other numbers of terminal devices, which is not limited by the embodiments of the present disclosure.

Alternatively, the wireless communications system 100 may further include other network entities such as a network controller, a mobility management entity or the like, which are not limited in the embodiments of the present disclosure.

It should be understood that the technical solutions of the embodiments of the present disclosure can be applied to various communication systems, such as a fifth generation (5G) system or a New Radio (NR) system, a Long Term Evolution (LTE) system, an LTE Frequency Division Duplex (FDD) system, an LTE Time Division Duplex (TDD), and the like. The technical solutions provided in the present disclosure can also be applied to a future communication system, such as a sixth generation mobile communication system, a satellite communication system, or the like.

The terminal device in the embodiments of the present disclosure may also be referred to as User Equipment (UE), an access terminal, a user unit, a user station, a mobile site, a Mobile Station (MS), a Mobile Terminal (MT), a remote station, a remote terminal, a mobile device, a user terminal, a terminal, a wireless communication device, a user agent, or a user apparatus. The terminal device in the embodiments of the present disclosure may be a device providing a user with voice and/or data connectivity and capable of connecting people, objects, and machines, such as a handheld device or a vehicle-mounted device with a wireless connection function. The terminal device in the embodiments of the present disclosure may be a mobile phone, a tablet computer (Pad), a notebook computer, a palmtop computer, a Mobile Internet Device (MID), a wearable device, a Virtual Reality (VR) device, an Augmented Reality (AR) device, a wireless terminal for industrial control, a wireless terminal for self driving, a wireless terminal for remote medical surgery, a wireless terminal for smart grid, a wireless terminal for transportation safety, a wireless terminal for smart city, a wireless terminal for smart home, or the like. Alternatively, UE may be used to function as a base station. For example, UE may function as a scheduling entity, which provides a sidelink signal between UEs in Vehicle-to-Everything (V2X), Device-to-Device (D2D), or the like. For example, a cellular phone and a vehicle communicate with each other through a sidelink signal. A cellular phone and a smart household device can communicate with each other without relaying a communication signal through a base station.

The network device in the embodiments of the present disclosure may be a device for communicating with the terminal device, and the network device may also be referred to as an access network device or a wireless access network device, e.g., the network device may be a base station. The network device in the embodiments of the present disclosure may refer to a Radio Access Network (RAN) node (or device) that connects the terminal device to a wireless network. The base station may broadly refer to or be replaced with the followings, such as: a NodeB, an evolved NodeB, (eNB), a next generation NodeB (gNB), a relay station, an access point, a Transmitting And Receiving Point (TRP), a Transmitting Point (TP), a master station (MeNB), a secondary station (SeNB), a MultiStandard Radio (MSR) node, a home base station, a network controller, an access node, a wireless node, an Access Point (AP), a transmission node, a transceiver node, a Base Band Unit (BBU), a Remote Radio Unit (RRU), an Active Antenna Unit (AAU), a Remote Radio Head (RRH), a Central Unit (CU), a Distributed Unit (DU), a positioning node, or the like. The base station may be a macro base station, a micro base station, a relay node, a donor node, or the like, or a combination thereof. The base station may also refer to a communication module, a modem, or a chip provided in a foregoing device or apparatus. The base station may also be a mobile switching center, a device serving as a base station in a D2D communication, a V2X communication, and a Machine-to-Machine (M2M) communication, a network-side device in a 6G network, a device serving as a base station in a future communication system, etc. The base station may support networks of identical or different access technologies. A specific technology and a specific device form adopted by the network device are not limited in the embodiments of the disclosure.

The base station may be fixed or mobile. For example, a helicopter or an Unmanned Aerial Vehicle (UAV) may serve as a mobile base station. One or more cells may move based on a location of the mobile base station. In another example, a helicopter or a UAV may serve as a device communicating with another base station.

In some deployments, the network device in the embodiments of the disclosure may refer to a CU or a DU. Alternatively, the network device may include a CU and a DU. The gNB may further include an AAU.

The network device and the terminal device may be deployed on land, including indoor or outdoor, handheld, or onboard, deployed on water, or deployed on an airborne aircraft, balloon, satellite, etc. The scenarios in which the network device and terminal device are deployed are not limited in the embodiments of the disclosure.

It is to be understood that all or some functions of the communication device in the disclosure may also be implemented through a software function run on hardware, or through a virtual function instantiated on a platform (such as a cloud platform).

### CSI Feedback

In the wireless communication system, a channel feature is extracted and fed back mainly by using a codebook-based approach. That is, after a receiver performs channel estimation, a precoding matrix that best matches a current channel is selected from a preset precoding codebook based on a channel estimation result and according to certain optimization criteria, and a precoding matrix index (PMI) is fed back to a transmitter for precoding through a feedback link of an air interface. In some embodiments, the receiver may further provide a feedback on a measured channel quality indication (CQI) to the transmitter for adaptive modulation and encoding.

### Autoencoder

The autoencoder is a neural network that uses an input signal as a training target, and an architecture of an Artificial Intelligence (AI) encoder and/or AI decoder included in the autoencoder is naturally adapted to many architectures in the communication system. For example, the AI encoder and the AI decoder may correspond to a channel compression module and a decompression module in a CSI feedback process, respectively. Generally, the AI encoder in the autoencoder may perform feature extraction on a received signal carrying CSI, and the AI decoder in the autoencoder may recover the compressed CSI and fed back by the transmitter as much as possible at the receiver, so that the communication overhead for feedback CSI can be saved without affecting accuracy of CSI transmission.

FIG. 2 illustrates a CSI feedback system based on an autoencoder. As illustrated in FIG. 2, that entire feedback system includes the autoencoder, which includes an AI encoder 211 deployed at a transmitter (e.g., the terminal device) 210 and an AI decoder 621 deployed at a receiver 620 (e.g., the network device). The transmitter 610 compresses and encodes CSI to be transmitted through the AI encoder 611 to obtain compressed CSI. Then, the compressed CSI is fed back to the receiver 620 through the feedback link, and the receiver 620 decodes the compressed CSI through the AI decoder 621 to obtain the recovered CSI.

In some scenarios, the autoencoder may be trained based on a training set before the autoencoder is deployed in the communication system. For example, when the autoencoder includes only the AI decoder, the AI decoder may be trained based on the training set. When the autoencoder includes the AI encoder, the AI encoder may be trained based on the training set. When the autoencoder includes the AI encoder and the AI decoder, the AI encoder and the AI decoder may be jointly trained.

In some implementations, since the autoencoder is a neural network model that takes an input signal as a training target, when the difference between the input and output of the autoencoder is expressed by a loss function, the training target of the autoencoder can be understood as optimizing the weights of the AI encoder and the AI decoder with a minimum loss function.

For example, an autoencoder including an AI encoder f (·) and an AI decoder g (·) is denoted as g (f (·)). An original signal is first encoded by the AI encoder f (·), the AI encoder f (·) outputs an encoded signal expressed as q = f (s). When the encoded signal is input to the AI decoder g (·) for decoding, the decoded signal output by the AI decoder g (·) is expressed as s ' = g (q) = g (f (s)). In a joint training stage, min _ {g, f} 1 (s, g (f (s))) can be taken as the training target, and the AI encoder f (·) and the AI decoder g (·) can be jointly trained, where 1 (·) represents the loss function.

At present, a training process of the autoencoder can be divided into online learning (also known as "online training") and offline learning (also known as "offline training"). The offline training can be understood that all training data can be obtained, and the autoencoder is trained offline in batches of data after random scrambling. Usually, the autoencoder is used for encoding and decoding after the offline training is completed. The online learning is different from the offline training, the online learning can update the model online through online streaming data, train the autoencoder based on a data sample or a batch of data samples obtained in real time, capture data changes in time, and effectively improve an update frequency of the autoencoder.

At present, the R18 discussion mainly focuses on an AI framework that combines the offline training and online inference, and there is no definite solution for the online training. In addition, due to complexity of a real communication system environment and a high generalization requirement for the autoencoder, simulation results of most companies are evaluated based on simulation data, and it is rare to use real data to evaluate the communication system solution. However, with the improvement of the capabilities of the terminal device and the network device in the future, more real system data can be obtained, and accordingly, online training approaches will be discussed more and more.

It should be noted that the autoencoder is an AI model for CSI processing in the embodiments of the present disclosure, and of course, an encoding model and/or a decoding model in the embodiments of the present disclosure may be other mathematical models, for example, a machine learning model.

### Neural Network

In recent years, an AI research represented by a neural network has achieved great results in many field, and the AI research will also play an important role in people's production and life for a long time in the future. A common neural network is a Convolutional Neural Network (CNN), a Recurrent Neural Network (RNN), a Deep Neural Network (DNN), etc.

The neural network applicable to the embodiments of the present disclosure will be described below in combination with FIG. 3. The neural network illustrated in FIG. 3 may be divided into three categories based on positions of different layers: an input layer 310, hidden layers 320, and an output layer 330. Generally speaking, the first layer is the input layer 310, the last layer is the output layer 330, and an intermediate layer between the first layer and last layer is the hidden layers 320.

The input layer 310 is configured to input data. Herein the input data may be the received signal received by the receiver. The hidden layers 320 are configured to process the input data, such as decompressing the received signal. The output layer 330 is configured to output processed output data, such as outputting a decompressed signal.

As illustrated in FIG. 3, the neural network includes multiple layers, and each of the multiple layers includes multiple neurons. The neurons between one of the multiple layers and another of the multiple layers may be fully connected or partially connected to each other. For connected neurons, an output of the neuron in a previous layer may be served as an input of the neuron in a next layer.

With the continuous development of a neural network research, a neural network deep learning algorithm has been proposed in recent years. The neural network deep learning algorithm introduces a significant number of hidden layers in the neural network to form a DNN. More hidden layers allow the DNN to better describe complex situations in the real world. Theoretically, the more parameters a model has, the higher its complexity and the greater its "capacity", which means that it is capable of performing more complex learning tasks. The neural network model is widely used in pattern recognition, signal processing, optimization combination, anomaly detection, and other fields.

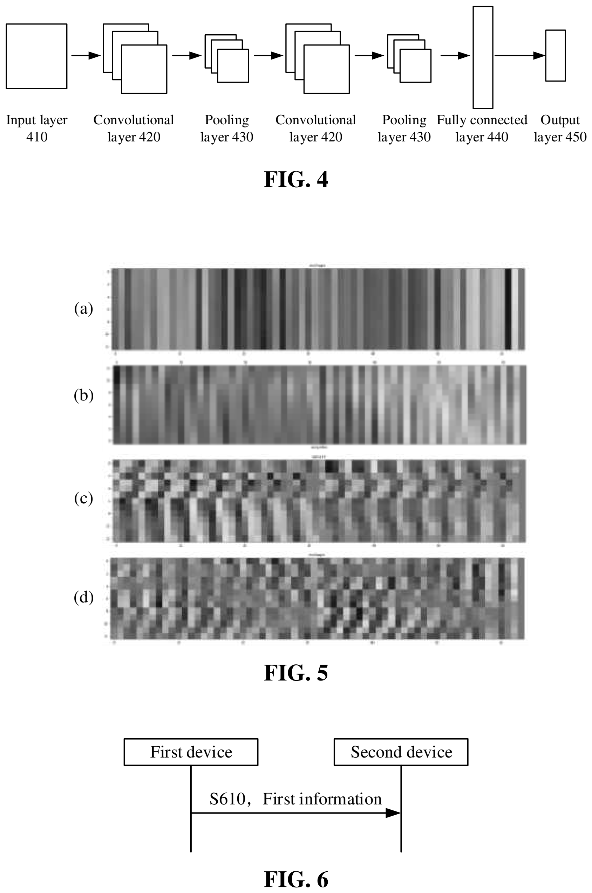

A CNN is a DNN with a convolutional structure, and the structure thereof is illustrated in FIG. 4. The CNN may include an input layer 410, convolutional layers 420, pooling layers 430, a fully connected layer 440, and an output layer 450.

Each convolution layer 420 may include multiple convolution operators, also referred to as kernels, which may function as a filter for extracting specific information from an input signal. The convolution operator may essentially be a weight matrix, which is usually predefined.

Weight values in the weight matrices need a large amount of training in a practical application. Each of the weight matrices formed by the trained weight values may extract information from the input signal, thereby helping the CNN perform a correct prediction.

When the CNN has multiple convolutional layers, an initial convolutional layer often extracts more general features, and the general features may also be referred to as low-level features. As a depth of CNN deepens, features extracted by a convolutional layer disposed at a more subsequent position become more and more complex.

Since it is usually needed to reduce the number of training parameters, the pooling layer 430 often needs to be periodically introduced after the convolutional layer. For example, as illustrated in FIG. 4, one convolutional layer may be followed by one pooling layer, or multiple convolutional layers may be followed by one or more pooling layers. A sole purpose of the pooling layer in a signal processing process is to reduce a spatial size of extracted information.

After the fully connected layer 440 is processed by the convolutional layer 420 and the pooling layer 430, the CNN is not yet sufficient to output required output information. As mentioned above, the convolutional layer 420 and the pooling layer 430 only extract features and reduce the parameters brought by the input data. However, in order to generate final output information (such as bitstream of original information transmitted by a transmitting end), the CNN further needs to utilize the fully connected layer 440. Usually, the fully connected layer 440 may include multiple hidden layers, and parameters contained in the multiple hidden layers may be obtained by pre-training relevant training data for a specific task type. For example, the task type may include decoding a data signal received by the receiver, or for example, the task type may include channel estimation based on pilot signals received by the receiver.

The output layer 450 disposed backward the multiple hidden layers of the fully connected layer 440, namely, the last layer of an entire CNN, is configured to output a result. Usually, the output layer 450 is arranged with the loss function (such as a loss function similar to classification cross entropy) configured to calculate a prediction error, or to evaluate a degree of difference between an output result (which is also referred as a predicted value) of a CNN model and an ideal result (which is also referred as true values).

In order to minimize the loss function, it is necessary to train the CNN model. In some implementations, the CNN model may be trained by using a backpropagation algorithm (BP). A training process of the BP includes a forward propagation process and a backward propagation process. In the forward propagation process (as illustrated in FIG. 4, a propagation from the input layer 410 to the output layer 450 is the forward propagation), the input data is input into each of the above-mentioned layers of the CNN model, and transmitted to the output layer after being processed layer by layer. If there is a significant difference between the output result and the ideal result in the output layer, minimizing the above loss function is taken as an optimization objective, and the training processor is turned to backward propagation (as illustrated in FIG. 4, a propagation from the output layer 450 to the input layer 410 is the backward propagation). A partial derivative of the optimization objective on the weight value of each neuron is calculated layer by layer, a gradient of the optimization objective on a weight vector is formed, and the gradient may be taken as a basis for modifying the weight of the model. A training process of the CNN is completed during a weight modification process. When the above error reaches an expected value, the training process of the CNN ends.

It should be noted that the CNN illustrated in FIG. 4 is only an example of the convolutional neural network. In a specific application, the convolutional neural network may also exist in a form of other network models, which is not limited by the embodiments the present disclosure.

As described above, in the CSI feedback process, the CSI (also referred to as "CSI to be encoded", "CSI sample", or "original CSI") may be compressed using the encoding model, and the compressed CSI information may be recovered by the decoding model. At present, the complexity of the CSI directly affects performance of the encoding model and/or decoding model. Generally, under the combined influence of a complex wireless environment and a system factor, the CSI presents rich diversity. Different CSIs carry different amounts of information, and some CSIs have higher intersubband correlations, which are relatively easy to compress and have higher decoding accuracy. However, some CSIs have lower intersubband correlations and carry a larger amount of information. In this case, if the CSIs with the lower intersubband correlations are fed back using the same number of feedback bits as the CSIs with the higher intersubband correlation, it may result in the decrease in recovery accuracy of the CSIs, or result in the large number of feedback bits, causing waste of resources.

In the known CSI feedback process, an encoding end (hereinafter also referred to as a "first device") usually compresses CSI using a fixed-feedback-bits based encoding model, and accordingly, a decoding end (hereinafter also referred to as a "second device") decodes the compressed CSI information using a fixed-feedback-bits based decoding model to obtain CSI recovery information. However, in the CSI feedback process of the fixed-feedback-bits based encoding model and/or decoding model, the problem that different CSIs may correspond to different complexity is not considered, resulting in either lower recovery accuracy of the CSIs with higher complexity or the larger number of feedback bits for the CSIs with lower complexity in practical applications.

For example, FIG. 5 illustrates visualization results of four different CSIs. As illustrated in FIG. 5 (a) to FIG. 5 (d), the information in the subband dimension (each column) of the CSI in FIG. 5 (a) is almost the same, presenting a wideband characteristic. The amount of information carried by such CSI is relatively less, that is, the intersubband correlation in CSI is higher. The complexity of the CSI in FIG. 5 (b) is slightly higher than that of the CSI in FIG. 5 (a). The complexity of the CSI in FIG. 5 (c) is slightly higher than that of the CSI in FIG. 5 (b). Relatively speaking, the complexity of the CSI in FIG. 5 (d) is the highest.

Taking the CSI in FIG. 5 (a) and the CSI in FIG. 5 (d) as an example, if the same number of feedback bits is adopted for both CSIs, if the encoding model corresponding to the number of feedback bits is suitable for the CSI in FIG. 5 (a), the CSI in FIG. 5 (a) may lose less information in the compression process. Accordingly, when the compressed CSI information is recovered, the recovery accuracy of the obtained CSI recovery information is relatively higher, that is, the recovery accuracy of the decoding model is relatively higher.

However, if the encoding model corresponding to the number of feedback bits described above is still used to compress the CSI in FIG. 5 (d), due to the higher complexity of the CSI in FIG. 5 (d), more information may be lost during the compression process. Accordingly, after the compressed CSI information is recovered, the recovery accuracy of the CSI recovery information is relatively lower, that is, the recovery accuracy of the decoding model is relatively lower.

Therefore, an embodiment of the present disclosure provides a method for wireless communication. In the method, the first device may compress different CSIs using different numbers of feedback bits, that is, dynamically adjust the number of feedback bits for different CSI feedbacks, which is beneficial to avoid resource waste caused by transmission of the CSI feedback while ensuring the recovery accuracy of the CSI. Generally, after the first device selects an appropriate feedback bit and compresses the CSI using the encoding model, the second device needs to select the decoding model corresponding to the feedback bit to decode the compressed information to obtain the CSI recovery information. However, the number of feedback bits is usually selected by the first device, and the second device cannot learn the information, resulting in the second device being unable to select an appropriate decoding model.

Therefore, in order to avoid the above problems, as illustrated in FIG. 6, in operation S610, a first device may send first information to a second device. The first information indicates the number of feedback bits for first CSI, which is beneficial to the second device to select an appropriate decoding model for decoding based on the number of feedback bits.

In some implementations, the first information may include numerical information of the number of feedback bits and/or level information of the number of feedback bits, so as to indicate the number of feedback bits of the first CSI, which is not limited by the embodiments of the present disclosure.

In some cases, the first information indicates the number of feedback bits for the first CSI, which can be replaced by the first information indicating the decoding model for the first CSI.

In some implementations, the first information includes indication information for an encoding model for the first CSI, and/or indication information for a decoding model for the first CSI, which is not limited by the embodiments of the present disclosure.

It should be noted that the first device may be a sending end of compressed information of the first CSI, for example, it may be a terminal device. Of course, in the embodiment of the present disclosure, the first device may be a network device. The embodiments of the present disclosure are not limited thereto. Accordingly, the second device may be a receiving end of compressed information of the first CSI. For example, the second device may be a network device. Of course, in the embodiment of the present disclosure, the second device may be a terminal device, and the embodiments of the present disclosure are not limited thereto.

For example, when the first device is a terminal device and the second device is a network device, the first information may be carried in Uplink Control Information (UCI). Of course, the first information may also be send as uplink data through a data channel, and the embodiments of the present disclosure are not limited thereto.

Generally speaking, different numbers of feedback bits need to be implemented using different encoding models, and in some implementations, in order to dynamically adjust the number of feedback bits, the first device may include multiple encoding models, and accordingly, an encoding model for the first CSI may be a first encoding model among the multiple encoding models. Of course, in the embodiments of the present disclosure, one encoding model may realize the encoding process of multiple feedback bits, and in this case, the first device may include one encoding model, and accordingly, the encoding model for the first CSI may be the encoding model.

The number of feedback bits for CSI output by different encoding models among the multiple encoding models is different. Of course, in the embodiments of the present disclosure, the number of feedback bits for the CSI output by at least two of the multiple encoding models is different. The embodiments of the present disclosure are not limited thereto.

As described above, since the number of feedback bits corresponding to CSIs with different complexity may be different, the number of feedback bits for CSI may be determined based on complexity of the first CSI. In addition, in some scenarios, encoding models corresponding to different numbers of feedback bits may be different, so it can be understood that the encoding model for the first CSI is determined based on the complexity of the first CSI.

Hereinafter, two methods for determining the complexity of CSI provided by embodiments of the present disclosure are described. it should be noted that the embodiments of the present disclosure do not limit the approach for determining the complexity of CSI, and other methods for determining the complexity of CSI may be applied to the embodiments of the present disclosure, and for example, the complexity of CSI may be determined in combination with a first implementation and a second implementation.

In the first implementation, the complexity of the first CSI may be determined based on subband information in the first CSI. Accordingly, it may be understood that the number of feedback bits and/or the encoding model for the first CSI are/is determined by the subband information in the first CSI.

The subband information in the first CSI may include, for example, an intersubband correlation in the first CSI. Generally speaking, the higher intersubband correlation in the first CSI, the lower the complexity of the first CSI. On the contrary, the lower intersubband correlation in the first CSI, the higher the complexity of the first CSI.

In some implementations, before the first device sends the first information to the second device, the method may further include that: the first device determines autocorrelation coefficients between each pair of subbands among multiple subbands in the first CSI; the first device determines the intersubband correlation for the multiple subbands based on the autocorrelation coefficients between each pair of subbands among the multiple subbands in the first CSI; and the first device determines the number of feedback bits and/or the encoding model for the first CSI based on the intersubband correlation.

It should be noted that the first device determines the number of feedback bits and/or the encoding model for the first CSI based on the intersubband correlation, which may be understood that the first device determines the number of feedback bits based on the intersubband correlation, and then selects an encoding model for the first CSI based on the number of feedback bits. Of course, in the embodiments of the present disclosure, the first device may determine an encoding model for the first CSI based on the intersubband correlation and a correspondence between the intersubband correlation and the encoding model. The embodiments of the present disclosure are not limited thereto.

Taking a scenario with 32 ports and 13 subbands as an example, the first CSI may be expressed as a complex matrix consisting of 13 rows and 32 columns. The first CSI is divided into 13 subbands based on each row, and the autocorrelation coefficients between each pair of subbands are calculated. Finally, an average is taken to obtain a metric that measures the intersubband correlation in the first CSI (also called an "average subband autocorrelation coefficient"). If the average subband autocorrelation coefficient is larger, it indicates that the complexity of the first CSI is lower, and accordingly, a larger compression ratio can be used to obtain the smaller number of feedback bits to save feedback overhead. On the contrary, if the average subband autocorrelation coefficient is smaller, it indicates that the complexity of the first CSI is higher, and a smaller compression ratio is required to retain the larger number of feedback bits, so as to avoid losing more information, and ensure the recovery accuracy of the decoding model.

Table 2 illustrates the correspondences between the complexity of different CSIs and the number of feedback bits in the embodiments of the present disclosure. As illustrated in Table 2, if the average subband autocorrelation coefficient is within an interval [0, 0.5], it indicates that the complexity of CSI corresponding to the average subband autocorrelation coefficient is low, and in this case, the number of feedback bits that can be used is 2⁵. If the average subband autocorrelation coefficient is within an interval (0.5, 0.8], it indicates that the complexity of CSI corresponding to the average subband autocorrelation coefficient is medium, and then the number of feedback bits that can be used is 2⁶. If the average subband autocorrelation coefficient is within the interval (0.8, 1], it indicates that the complexity of CSI corresponding to the average subband autocorrelation coefficient is high, and then the number of feedback bits that can be used is 2⁷.

**Table 1**

| | | | |
|---|---|---|---|
| interval of the average subband autocorrelation coefficient | [0, 0.5] | (0.5, 0.8] | (0.8, 1] |
| complexity of the CSI | low | medium | high |
| number of feedback bits | 2⁶ | 2⁶ | 2⁷ |

In the second implementation, the complexity of the first CSI may be determined based on recovery accuracy corresponding to the first CSI (i.e., the accuracy of the CSI recovery information obtained after the compressed information of the first CSI is decoded by the decoding module). Accordingly, it can be understood that the number of feedback bits and/or the encoding model for the first CSI are determined based on the recovery accuracy corresponding to the first CSI.

In the embodiments of the present disclosure, the first device may compress the first CSI using multiple encoding models respectively, decode CSI compression information (i.e., CSI feedback) using decoding models corresponding to the multiple encoding models to obtain CSI recovery information, and then determine the number of feedback bits and/or the encoding model for the first CSI based on the CSI recovery information.

That is, the first device includes multiple encoding models, and the number of feedback bits for CSIs output by different encoding models among the multiple encoding models is different. Before the first device sends the first information to the second device, the above method may further include that: the first device compresses the first CSI based on the multiple encoding models to obtain multiple pieces of CSI compressed information; the first device inputs the multiple pieces of CSI compression information into multiple decoding models to obtain multiple pieces of CSI recovery information, each of the plurality of decoding models corresponding to a respective encoding model; and the first device determines the number of feedback bits and/or the encoding model for the first CSI based on the multiple pieces of CSI recovery information.

The first device determines the number of feedback bits and/or the encoding model for the first CSI based on the multiple pieces of CSI recovery information, which may include that the first device determines recovery accuracy corresponding to the multiple pieces of CSI recovery information based on the multiple pieces of CSI recovery information and the first CSI, and then determining the number of feedback bits and/or the recovery model for the first CSI based on the recovery accuracy.

In some implementations, the number of feedback bits and/or the recovery model for the first CSI with the recovery accuracy greater than target recovery accuracy (also referred to as "reference recovery accuracy") may be selected. Here, the target recovery accuracy may be preset, preconfigured, or configured by the network device, and is not limited by the embodiments of the present disclosure.

For example, the above reference recovery accuracy may be indicated by the second device to the first device through second information. The embodiments of the present disclosure do not limit the way for carrying the second information. For example, the second information may be carried in at least one of: a Radio Resource Control (RRC) signaling, a Medium Access Control Control Element (MAC CE), and Downlink Control Information (DCI).

It should be noted that the embodiments of the present disclosure do not specifically limit the evaluation metrics for the recovery accuracy. For example, the evaluation metrics for the recovery accuracy may be Generalized Cosine Similarity (SGCS), Mean Square Error (MSE) or other measurement methods.

Further, the first device may determine the number of feedback bits and/or the encoding model for the first CSI based on the multiple pieces of CSI recovery information, which can be understood that the first device determines the number of feedback bits based on the multiple pieces of CSI recovery information, and then selects the encoding model for the first CSI based on the number of feedback bits. Of course, in the embodiments of the present disclosure, the first device may determine the encoding model for the first CSI based on the multiple pieces of CSI recovery information and a correspondence between the recovery accuracy of the CSI recovery information and the encoding model. The embodiments of the present disclosure are not limited thereto.

It is assumed that the first device includes three AI models (including three encoding models and corresponding decoding models), the number of feedback bits used by the three AI models is 2⁵, 2⁶, and 2⁷, respectively, and the evaluation metrics for the recovery accuracy is SGCS. Accordingly, the terminal device may input the first CSI (denoted by W) to the three AI models respectively for encoding and decoding. The CSI recovery information output by the three AI models is W₁, W₂, and W₃. Then the corresponding recovery accuracies E₁, E₂, and E₃ are calculated respectively based on W₁, W₂, and W₃ through a formula Eₖ = SGCS (W, Wₖ), where k = 1, 2, and 3.

The terminal device may start from the recovery accuracy E₁ corresponding to the smallest number of feedback bits, and compare the recovery accuracy E₁ with the reference accuracy E₀ in sequence based on the reference accuracy E₀ and the calculated recovery accuracies E₁, E₂, and E₃. The process continues until recovery accuracy Eₖ that meets the condition Eₖ>E₀ is found. Accordingly, the number of feedback bits corresponding to the recovery accuracy is then determined.

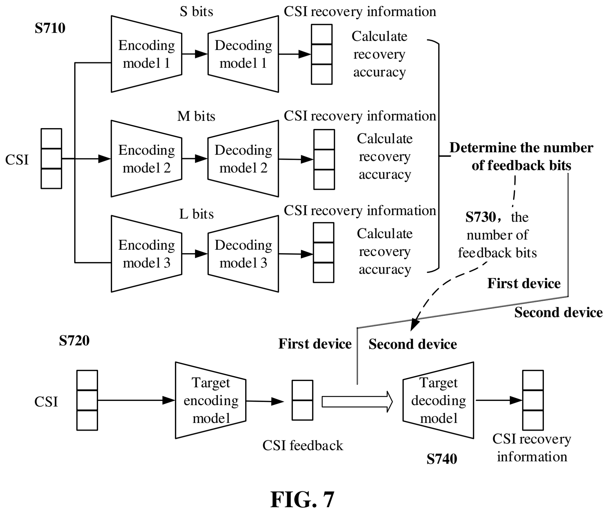

In order to facilitate understanding, the approach of the embodiments of the present disclosure will be described below with reference to FIG. 7 by taking the second implementation as an example. FIG. 7 is a schematic diagram illustrating a CSI feedback process according to another embodiment of the present disclosure. The method illustrated in FIG. 7 includes operation S710 to operation S740. Assume that k AI models are included in the first device, herein each AI model includes the encoding model and the decoding model.

In operation S710, the first device determines a target encoding model from multiple encoding models.

The multiple encoding models may include an encoding model in which the number of feedback bits is S bits, an encoding model in which the number of feedback bits is M bits, and an encoding model in which the number of feedback bits is L bits.

In some implementations, before CSI is fed back each time, the first device may perform pre-inference (i.e., compression and decompression) using k AI models in parallel or sequentially to obtain CSI recovery information. The target encoding model is determined based on the comparison between the recovery accuracy corresponding to the CSI recovery information and the reference recovery accuracy.

Continuing to refer to FIG. 7, taking k = 3 as an example, and referring to Table 2, the first device includes three AI models corresponding to different feedback bits: a low-bit model, a medium-bit model, and a high-bit model. For CSI with low complexity, recovery accuracy corresponding to the low-bit model can meet a requirement of the reference recovery accuracy, recovery accuracy corresponding to the medium-bit model may meet the requirement of the reference recovery accuracy, and recovery accuracy corresponding to the high-bit model may meet the requirement of the reference recovery accuracy. In this case, the encoding model in the models with less feedback bits can be preferentially selected, that is, the encoding model in the low-bit model can be selected as the target encoding model.

For CSI with medium complexity, the recovery accuracy corresponding to the low-bit model cannot meet the requirement of the reference recovery accuracy, the recovery accuracy corresponding to the medium-bit model can meet the requirement of the reference recovery accuracy, and the recovery accuracy corresponding to the high-bit model can meet the requirement of the reference recovery accuracy. In this case, the encoding model in the models with less feedback bits that meets the requirement of the reference recovery accuracy can be preferentially selected, that is, the encoding model in the medium bit model can be selected as the target encoding model.

For CSI with high complexity, the recovery accuracy corresponding to the low-bit model cannot meet the requirement of the reference recovery accuracy, the recovery accuracy corresponding to the medium-bit model cannot meet the requirement of the reference recovery accuracy, and the recovery accuracy corresponding to the high-bit model can meet the requirement of the reference recovery accuracy. In this case, the encoding model in the models meets the requirement of the reference recovery accuracy can be preferentially selected, that is, the encoding model in the high bit model can be selected as the target encoding model.

**Table 2**

| model determination | low-bit model S bits | medium-bit model M bits | high-bit model L bits |
|---|---|---|---|
| low complexity | meet requirement of recovery accuracy | prioritize low feedback bit number | prioritize low feedback bit number |
| medium complexity | does not meet requirement of recovery accuracy | meet requirement of recovery accuracy | prioritize medium feedback bit number |
| High complexity | does not meet requirement of recovery accuracy | not meet requirement of recovery accuracy | meet requirement of recovery accuracy |

In operation S720, the first device inputs the first CSI into the target encoding model for compression to obtain CSI compression information (or CSI feedback).

In operation S730, the first device sends the CSI compression information and the number of feedback bits of the first CSI (i.e., the number of bits contained in the CSI compression information) to the second device.

In operation S740, the second device determines a target decoding model matching the target encoding model based on the number of feedback bits, and decodes the CSI compression information using the target decoding model to obtain the CSI recovery information.

As described above, in some scenarios, the encoding model and the decoding model may be jointly trained, and the embodiments of the present disclosure do not limit the device(s) that perform(s) the joint training. For example, the device(s) performing the joint training may be the first device and/or the second device.

Taking the joint training of the first device as an example, after the training, the first device may send a model parameter of the decoding model to the second device. In other words, before the operation S610, the above method may further include that: the first device sends the model parameter to the second device, the model parameter including a model parameter for a decoding model for the CSI.

Taking the joint training of the second device as an example, after the training, the second device may send a model parameter of the encoding model and/or the decoding model to the first device. In other words, before the operation S610, the above method may further include that: the first device receives the model parameter from the second device, the model parameters including at least one of: a model parameter for an encoding model for CSI, and a model parameter for a decoding model for the CSI.

In the embodiments of the present disclosure, the first device may further perform online training (or online update) on the encoding model, that is, the method may further include that: the first device updates a first encoding model based on the first CSI.

In order to facilitate understanding, the method for wireless communication in the embodiments of the present disclosure will be described below in combination with a first embodiment to a third embodiment, taking the first device as the terminal device and the second device as a network device as the example.

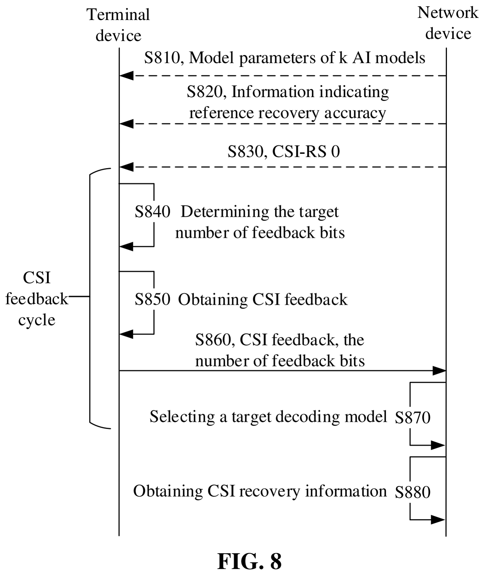

In the first embodiment, FIG. 8 is a flowchart illustrating a method for wireless communication according to the first embodiment of the present disclosure. The method illustrated in FIG. 8 includes operation S810 to operation S880. It is assumed that an encoding model is deployed in the terminal device and a decoding model is deployed in the network device, and the network device jointly trains the encoding model and the decoding model.

In the training process, the network device may jointly train the encoding model and the decoder, and send a model parameter of the encoding model to the terminal device after training. It should be noted that, in the embodiments of the present disclosure, in order to determine the number of feedback bits based on the recovery accuracy, the terminal device may simultaneously deploy the same decoding model as the network device.

In operation S810, the network device sends model parameters of k AI models to the terminal device.

In some implementations, each of the k AI models includes the encoding model and the decoding model.

In operation S820, the network device sends information to the terminal device, and the information indicates the reference recovery accuracy.

In operation S830, the network device sends CSI-RS 0 to the terminal device.

In some implementations, sending of the CSI-RS 0 described above may be understood as the start of a first CSI compression feedback task cycle.

In operation S840, the terminal device determines the target number of feedback bits for a current CSI feedback cycle.

In some implementations, the terminal device may pre-decode the CSI recovery information using a decoder, compare the CSI recovery information with CSI to be compressed, and calculate recovery accuracy corresponding to each CSI recovery information, and then select the target number of feedback bits based on the recovery accuracy corresponding to the CSI recovery information and the reference recovery accuracy.

It should be noted that the implementation for selecting the target number of feedback bits can refer to the description in the above second implementation, and will not be repeated here for the sake of brevity.

In operation S850, the terminal device encodes the CSI to be compressed based on the encoding model corresponding to the target number of feedback bits to obtain a CSI feedback (or CSI compression information).

In operation S860, the terminal device sends the CSI feedback to the network device.

In some implementations, the terminal device may send information 3 to the network device to indicate the target number of feedback bits.

For example, the information 3 may indicate the target number of feedback bits through 2 bits. Assuming that a value of 2 bits in the information 3 is {00}, it indicates that the terminal device has not found an AI model that meets the requirement of the reference recovery accuracy. If the value of 2 bits in the information 3 is {01}, that is, the value of the indication information corresponding to the target number of feedback bits is 1, it indicates that the terminal device has selected the target number of feedback bits of 2⁵. If the value of 2 bits in the information 3 is {10}, that is, the value of the corresponding indication information is 2, it indicates that the terminal device has selected the target number of feedback bits of 2⁶. If the value of 2 bits in the information 3 is {11}, that is, the value of the corresponding indication information is 3, it indicates that the terminal device has selected the target number of feedback bits of 2⁷.

In the embodiments of the present disclosure, the terminal device may feed back to the network device that the AI model which meets the requirement of the reference recovery accuracy is not found, and accordingly, the network device may directly adopt a corresponding fallback strategy, thereby avoiding invalid AI inference.

In operation S870, the network device selects a target decoding model based on an indication for the number of feedback bits.

In operation S880, the network device decodes the CSI feedback using the target decoding model to obtain CSI recovery information.

In the embodiments of the present disclosure, in each CSI compression feedback cycle, the terminal device may execute operation S810 to operation S880 to realize dynamic adjustment for the number of feedback bits based on the CSI, which is beneficial to reduce the number of feedback bits included in the CSI feedback on the premise of ensuring the recovery accuracy.

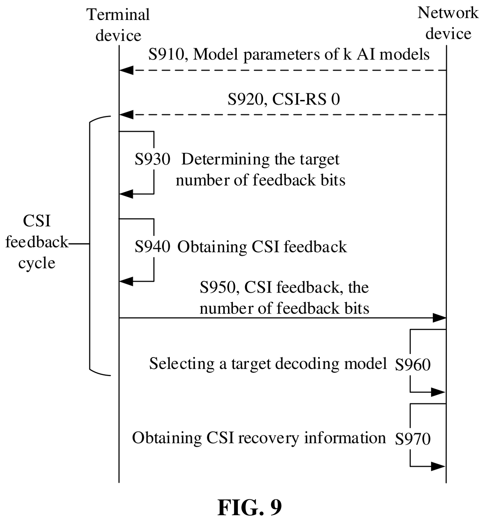

In the second embodiment, FIG. 9 is a flowchart illustrating a method for wireless communication according to the second embodiment of the present disclosure. The method illustrated in FIG. 9 includes operation S910 to operation S970. It is assumed that an encoding model is deployed in the terminal device and a decoding model is deployed in the network device, and the terminal device jointly trains the encoding model and the decoding model.

In the training process, the terminal device may jointly train the encoding model and the decoder, and send a model parameter of the decoding model to the network device after the training.

In operation S910, the terminal device sends model parameters of k decoding models to the network device.

In some implementations, the k decoding models belong to k AI models, and each of the k AI models includes the encoding model. The number of feedback bits corresponding to the k AI models is 2⁵, 2⁶, and 2⁷.

In operation S920, the network device sends CSI-RS 0 to the terminal device.

In some implementations, sending of the CSI-RS 0 described above may be understood as the start of first CSI compression feedback task cycle.

In operation S930, the terminal device determines the target number of feedback bits for a current CSI feedback cycle.

It should be noted that the implementation for determining the target number of feedback bits by the terminal device may refer to the description in above first implementation, and will not be repeated here for the sake of brevity.

In addition, the present embodiment is different from the first embodiment in that the terminal device may pre-decode CSI recovery information without using a decoder, and calculate the CSI recovery accuracy by comparing the CSI recovery information with the CSI to be compressed.

In operation S940, the terminal device compresses the CSI based on the target encoding model corresponding to the target number of feedback bits to obtain CSI feedback.

In operation S950, the terminal device sends the CSI feedback to the network device.

In some implementations, the terminal device may send information 1 to the network device to indicate the target number of feedback bits. For example, the information 3 may indicate the target number of feedback bits through 2 bits. Assuming that a value of 2 bits in the information 3 is {00}, it indicates an abnormal indication. If the value of 2 bits in the information 3 is {01}, that is, the value of the indication information corresponding to the number of feedback bits is 1, it indicates that the terminal device has selected the target number of feedback bits of 2⁵. If the value of 2 bits in the information 3 is {11}, that is, the value of the indication information corresponding to the target number of feedback bits is 2, it indicates that the terminal device has selected the target number of feedback bits of 2⁶. If the value of 2 bits in the information 3 is {10}, that is, the value of the indication information corresponding to the target number of feedback bits is 3, it indicates that the terminal device has selected the target number of feedback bits of 2⁷.

The abnormal indication may be executed before operation S930. For example, an abnormal check may be performed on CSI to be encoded firstly, and if the CSI to be encoded is abnormal information, the terminal device may directly feed back {00} to indicate that the CSI to be encoded is abnormal. In this case, the terminal device may not need to calculate the complexity of the CSI, thereby avoiding unnecessary operations.

In operation S960, the network device selects the target decoding model based on an indication for the target number of feedback bits.

In operation S970, the network device decodes the CSI feedback using the target decoding model to obtain the CSI recovery information.

In the embodiments of the present disclosure, in each CSI compression feedback cycle, the terminal device may execute the operation S910 to the operation S970 to realize dynamic adjustment for the number of feedback bits based on CSI, which is beneficial to reduce the number of feedback bits included in CSI feedback on the premise of ensuring the recovery accuracy.

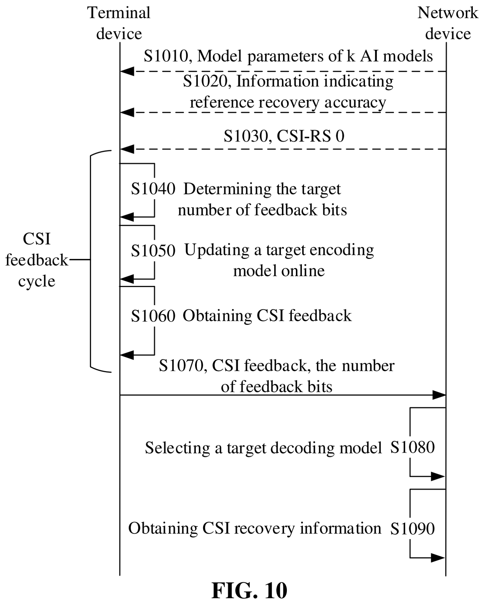

In the third embodiment, FIG. 10 is a flowchart illustrating a method for wireless communication according to the first embodiment of the present disclosure. The method illustrated in FIG. 10 includes operation S1010 to operation S1080. It is assumed that an encoding model is deployed in the terminal device and a decoding model is deployed in the network device, and the network device jointly trains the encoding model and the decoding model.

In the training process, the network device may jointly train the encoding model and the decoder, and send a model parameter of the encoding model to the terminal device after the training. It should be noted that, in the embodiments of the present disclosure, in order to determine the number of feedback bits based on the recovery accuracy, the terminal device may simultaneously deploy the same decoding model as the network device.

In operation S1010, the network device sends model parameters of k AI models to the terminal device.

In some implementations, each of the k AI models includes the encoding model and the decoding model.

In operation S1020, the network device sends information to the terminal device, and the information indicates the reference recovery accuracy.

In operation S1030, the network device sends CSI-RS 0 to the terminal device.

In some implementations, sending of the CSI-RS 0 described above may be understood as the start of a first CSI compression feedback task cycle.

In operation S1040, the terminal device determines the target number of feedback bits for a current CSI feedback cycle.

In some implementations, the terminal device may pre-decode CSI recovery information using a decoder, compare the CSI recovery information with CSI to be compressed, and calculate recovery accuracy corresponding to each CSI recovery information, and then select the target number of feedback bits based on the recovery accuracy corresponding to the CSI recovery information and the reference recovery accuracy.

It should be noted that the implementation for selecting the target number of feedback bits can refer to the description in the above second implementation, and will not be repeated here for the sake of brevity.

In operation S1050, the terminal device updates a target encoding model corresponding to the target number of feedback bits online by using the CSI.

It should be noted that, in the embodiments of the present disclosure, the terminal device may determine the target encoding model based on the target number of feedback bits, and thus, the terminal device may only update the target encoding model online to reduce the duration of online update. Of course, in the embodiments of the present disclosure, the terminal device may update all the encoding models online.

Further, in order to reduce the duration of online update, the terminal device may update only the target encoding model without online updating the target decoding model corresponding to the target encoding model deployed in the terminal device. Of course, in the embodiments of the present disclosure, the terminal device may update the target decoding model deployed in the terminal device online, and send the model parameter of the updated target decoding model to the network device, which is beneficial to improve the recovery accuracy of the target decoding model.

In operation S1060, the terminal device encodes CSI to be encoded based on the updated target encoding model to obtain CSI feedback.

In operation S1070, the terminal device sends the CSI feedback to the network device.

In some implementations, the terminal device may send information 3 to the network device to indicate the target number of feedback bits.

For example, the information 3 may indicates the target number of feedback bits through 2 bits. Assuming that a value of 2 bits in the information 3 is {00}, it indicates that the terminal device has not found an AI model that meets the requirement of the reference recovery accuracy. If the value of 2 bits in the information 3 is {01}, that is, the value of the indication information corresponding to the target number of feedback bits is 1, it indicates that the terminal device has selected the target number of feedback bits of 2⁵. If the value of 2 bits in the information 3 is {10}, that is, the value of the corresponding indication information is 2, it indicates that the terminal device has selected the target number of feedback bits of 2⁶. If the value of 2 bits in the information 3 is {11}, that is, the value of the corresponding indication information is 3, it indicates that the terminal device has selected the target number of feedback bits of 2⁷.

In the embodiments of the present disclosure, the terminal device may feed back to the network device that the AI model meeting the requirement of the reference recovery accuracy is not found, and accordingly, the network device may directly adopt a corresponding fallback strategy, thereby avoiding invalid AI inference.

In operation S1080, the network device selects a target decoding model based on an indication for the number of feedback bits.

In operation S1090, the network device decodes the CSI feedback using the target decoding model to obtain CSI recovery information.

In the embodiments of the present disclosure, in each CSI compression feedback cycle, the terminal device may execute the operation S1010 to the operation S1090 to realize dynamic adjustment for the number of feedback bits based on CSI, which is beneficial to reduce the number of feedback bits included in CSI feedback on the premise of ensuring the recovery accuracy.

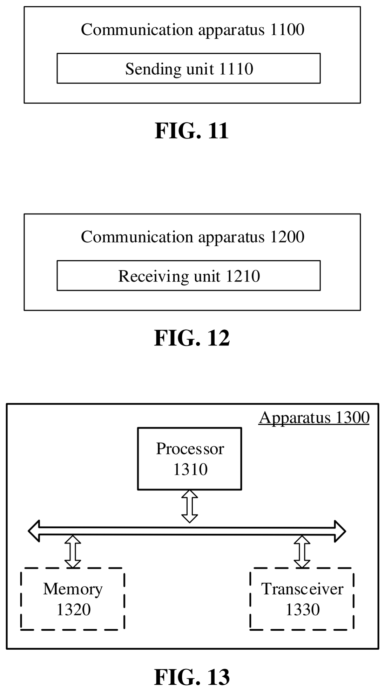

The method embodiments of the present disclosure are described in detail with reference to FIG. 1 to FIG. 10. Hereinafter, and apparatus embodiments of the present disclosure are described in detail with reference to FIG. 11 to FIG. 13. It should be understood that the descriptions for the method embodiments correspond to those of the apparatus embodiments, and therefore, the portions of the apparatus embodiments not described in detail can be referred to the foregoing method embodiments.

FIG. 11 is a schematic diagram illustrating a communication apparatus according to an embodiment of the present disclosure. The communication apparatus 1100 illustrated in FIG. 11 may be a first device, and the communication apparatus 1100 includes a sending unit 1110.

The sending unit 1110 is configured to send first information to a second device, and the first information indicates the number of feedback bits for first CSI.

In some implementations, the first device may include at least one encoding model, and an encoding model for the first CSI is a first encoding model among the at least one encoding model.

In some implementations, the first device may include multiple encoding models, and the number of feedback bits for CSI output by different encoding models among the multiple encoding models is different.

In some implementations, the number of feedback bits and/or an encoding model for the first CSI may be determined based on complexity of the first CSI.

In some implementations, the complexity of the first CSI may be determined based on at least one of: subband information in the first CSI, and recovery accuracy corresponding to the first CSI.

In some implementations, the subband information in the first CSI may include an intersubband correlation in the first CSI.

In some implementations, the communication apparatus may further include a first processing unit. The first processing unit is configured to: determine autocorrelation coefficients between each pair of subbands among multiple subbands in the first CSI; determine the intersubband correlation for the multiple subbands based on the autocorrelation coefficients between each pair of subbands among the multiple subbands in the first CSI; and determine the number of feedback bits and/or the encoding model for the first CSI based on the intersubband correlation.

In some implementations, the first device may include multiple encoding models, and the number of feedback bits for CSI output by different encoding models among the multiple encoding models is different, and the communication apparatus may further include a second processing unit. The second processing unit is configured to: compress the first CSI based on the multiple encoding models to obtain multiple pieces of CSI compression information; input the multiple pieces of CSI compression information into multiple decoding models to obtain multiple pieces of CSI recovery information, each of the multiple decoding models corresponding to a respective encoding model; and determine the number of feedback bits and/or the encoding model for the first CSI based on the multiple pieces of CSI recovery information.

In some implementations, the communication apparatus may further include a first receiving unit. The first receiving unit is configured to receive second information from the second device. The second information is used for determining the number of feedback bits and/or an encoding model for the first CSI.

In some implementations, the second information may indicate a reference value of recovery accuracy corresponding to CSI.

In some implementations, the second information may be carried in one of: an RRC signaling, an MAC CE, and DCI.

In some implementations, the first information may include at least one of: numerical information of the number of feedback bits, level information of the number of feedback bits, indication information for an encoding model for the first CSI, and indication information for a decoding model for the first CSI.

In some implementations, the communication apparatus may further include a second receiving unit. The second receiving unit is configured to receive a model parameter from the second device. The model parameter may include at least one of: a model parameter for an encoding model for CSI, and a model parameter for a decoding model for the CSI.

In some implementations, the sending unit is further configured to send a model parameter to the second device. The model parameter may include a model parameter for a decoding model for CSI.

In some implementations, the communication apparatus may further include a third processing unit. The third processing unit is configured to update a first encoding model based on the first CSI.

In some implementations, the first information may be carried in UCI.

In some implementations, the first device is a terminal device, and the second device is a network device.

FIG. 12 is a schematic diagram illustrating a communication apparatus according to another embodiment of the present disclosure. The communication apparatus 1200 illustrated in FIG. 12 is a second device. The communication apparatus 1200 includes a receiving unit 1210.

The receiving unit 1210 is configured to receive first information from the first device, and the first information indicates the number of feedback bits for first CSI.

In some implementations, the first device may include at least one encoding model, and an encoding model for the first CSI is a first encoding model among the at least one encoding model.

In some implementations, the first device may include multiple encoding models, and the number of feedback bits for CSI output by different encoding models among the multiple encoding models is different.

In some implementations, the number of feedback bits and/or an encoding model for the first CSI may be determined based on complexity of the first CSI.

In some implementations, the complexity of the first CSI may be determined based on at least one of: subband information in the first CSI, and recovery accuracy corresponding to the first CSI.

In some implementations, the subband information in the first CSI may include an intersubband correlation in the first CSI.

In some implementations, the communication apparatus may further include a first sending unit. The first sending unit is configured to send second information to the first device. The second information is used for determining the number of feedback bits and/or an encoding model for the first CSI.

In some implementations, the second information may indicate a reference value of recovery accuracy corresponding to CSI.

In some implementations, the second information may be carried in one of: an RRC signaling, an MAC CE, and DCI.

In some implementations, the first information may include at least one of: numerical information of the number of feedback bits, level information of the number of feedback bits, indication information for an encoding model for the first CSI, and indication information for a decoding model for the first CSI.

In some implementations, the communication apparatus may further include a second sending unit. The second sending is configured to send a model parameter to the first device. The model parameter includes at least one of: a model parameter for an encoding model for CSI, and a model parameter for a decoding model for the CSI.

In some implementations, the receiving unit is further configured to receive a model parameter from the first device. The model parameter includes a model parameter for a decoding model for CSI.

In some implementations, the first information may be carried in UCI.

In some implementations, the first device is a terminal device, and the second device is a network device.

FIG. 13 is a schematic structural diagram of an apparatus according to an embodiment of the present disclosure. A dashed line shown in FIG. 13 indicates that a unit or module is optional. The apparatus 1300 may be configured to implement the method described in the above method embodiments. The apparatus 1300 may be a chip or a terminal device.

The apparatus 1300 may include at least one processor 1310. The processor 1310 may support the apparatus 1300 to implement the methods described in the previous method embodiments. The processor 1310 may be a general-purpose processor or a dedicated processor. For example, the processor may be a Central Processing Unit (CPU). Alternatively, the processor may also be other general-purpose processors, a Digital Signal Processor (DSP), an Application Specific Integrated Circuit (ASIC), a Field Programmable Gate Array (FPGA), or other programmable logic device, discrete gate or transistor logic device, or discrete hardware component, etc. The general-purpose processor may be a microprocessor or the processor may also be any conventional processor, etc.

The apparatus 1300 may further include at least one memory 1320. A program is stored on the memory 1320, and may be executed by the processor 1310, so as to cause the processor 1310 to perform the method described in the above embodiments. The memory 1320 may be independent of the processor 1310 or may be integrated into the processor 1310.

The apparatus 1300 may also include a transceiver 1330. The processor 1310 may communicate with another device or a chip through the transceiver 1330. For example, the processor 1310 may transmit and receive data to and from the other device or the chip through the transceiver 1330.

An embodiment of the present disclosure further provides a computer-readable storage medium configured to store a program. The computer-readable storage medium may be applied to the terminal device or the network device provided by the embodiments of the present disclosure, and the program causes a computer to perform the method performed by the terminal device in each embodiment of the present disclosure.

An embodiment of the present disclosure further provides a computer program product. The computer program product includes a program. The computer program product may be applied to the terminal device provided by the embodiments of the present disclosure, and the program causes a computer to perform the method performed by the terminal device in each embodiment of the present disclosure.

An embodiment of the present disclosure further provides a computer program. The computer program may be applied to the terminal device provided by the embodiments of the present disclosure, and the computer program causes a computer to perform the method performed by the terminal device in each embodiment of the present disclosure.

It should be understood that the terms "system" and "network" are often used interchangeably in the present disclosure. In addition, the terms used in the embodiments of the present disclosure are only used to explain the embodiments of the present disclosure, and are not intended to limit the present disclosure. The terms "first", "second", "third" and "fourth" in the description, claims and the drawings of the present disclosure are used to distinguish different objects, rather than to describe a specific order. In addition, the terms "include/comprise" and "have" and any deformation thereof are intended to cover non-exclusive inclusion.

In the embodiments of the present disclosure, the "indication/indicate/indicating" mentioned may be a direct indication, an indirect indication, or a representation of an association relationship. For example, A indicates B, which may represent that A directly indicates B, e.g., B may be obtained from A; or may represent that A indirectly indicates B, e.g., A indicates C and B may be obtained from C; or may represent that there is an association relationship between A and B.

In the embodiments of the present disclosure, "B corresponding to A" represents that B is associated with A, and B may be determined based on A. However, it should also be understood that determining B based on A does not mean determining B solely based on A, but may also be determined based on A and/or other information.

In the embodiments of the present disclosure, the term "correspondence/correspond/corresponding" may represent that there is a direct correspondence or an indirect correspondence between two objects; or may represent an association relationship between the two objects, or a relationship between indication and being indicated, between configuration and being configured or the like.

In the embodiments of the present disclosure, "predefined" or "preconfigured" may be achieved by pre-storing corresponding codes, tables, or other means that can be used to indicate related information in the device (e.g., the terminal device and the network device), and the present disclosure is not limited to its specific implementation. For example, the "predefined" may refer to being defined in a protocol.

In the embodiments of the present disclosure, the "protocol" may refer to a standard protocol in the field of communications, which may include, for example, an LTE protocol, a NR protocol, and related protocols applied in a future communication system, which is not limited by the present disclosure.

In the embodiments of the present disclosure, the term "and/or" describes an association relationship between associated objects, and represents that three relationships may exist. For example, A and/or B may represent three situations: independent existence of A, existence of both A and B, and independent existence of B. In addition, the character "/" used herein usually represents that the associated objects before and after the character "/" form an "or" relationship.

In various embodiments of the present disclosure, the serial numbers of the processes do not imply the order of execution, and the order of execution of the processes shall be determined by their function and intrinsic logic, and shall not constitute any limitation to the processes implemented in the embodiments of the present disclosure.

In the several embodiments provided by present disclosure, it should be understood that, the disclosed system, apparatus, and method may be implemented in other ways. For example, the apparatus embodiments described above are merely illustrative. For example, the division of the units is only a logical function division, and there may be other divisions in an actual implementation. For example, multiple units or components can be combined or can be integrated into another system, or some features can be ignored or not implemented. In addition, the displayed or discussed mutual coupling, direct coupling, or communication connection may be indirect coupling or communication connection through some interfaces, devices or units, and may be in electrical, mechanical, or other forms.

The units described as separate components may or may not be physically separated, and the components displayed as units may or may not be physical units. That is, they may be located at one position, or they may be distributed on multiple network units. Some or all of the units may be selected according to actual needs to achieve the objectives of the solutions of the embodiments.

In addition, the functional units in various embodiments of the present disclosure may be integrated into one processing unit, or each unit may exist alone physically, or two or more units may be integrated into one unit.

The above embodiments of the present disclosure may fully or partially implemented by software, hardware, firmware or any combination thereof. When implemented in software, the embodiments may be fully or partially implemented in the form of a computer program product. The computer program product includes one or more computer instructions. When the computer program instructions are loaded and executed on a computer, all or part of the processes or functions according to the embodiments of the present disclosure are generated. The computer may be a general-purpose computer, a dedicated computer, a computer network, or other programmable devices. The computer instructions may be stored in a computer-readable storage medium, or may be transmitted from one computer-readable storage medium to another computer-readable storage medium. For example, the computer instructions may be transmitted from one website site, computer, server, or data center to another website site, computer, server, or data center through a wired (e.g., a coaxial cable, an optical fiber, a digital subscriber line (DSL)) or a wireless (e.g., infrared, wireless, microwave, etc.) manner. The computer-readable storage medium may be any available medium that a computer can access, or may be a data storage device such as a server or a data center that includes one or more available media. The available medium may be a magnetic medium (such as, a floppy disk, a hard drive, a magnetic tape), an optical medium (e.g., a Digital Video Disc (DVD)), or a semiconductor medium (e.g., a solid state disk (SSD)) and the like.

The above is only the specific implementation of the present disclosure and not intended to limit the scope of protection of the present disclosure. Any variations or replacements apparent to those skilled in the art within the technical scope disclosed by the present disclosure shall fall within the scope of protection of the present disclosure. Therefore, the scope of protection of the present disclosure shall be subject to the scope of protection of the claims.

## Claims

1. A method for wireless communication, comprising:
sending, by a first device, first information to a second device, the first information indicating the number of feedback bits for first Channel State Information (CSI).

2. The method of claim 1, wherein the first device comprises at least one encoding models, an encoding model for the first CSI is a first encoding model among the at least one encoding model.

3. The method of claim 2, wherein the first device comprises a plurality of encoding models, and the number of feedback bits for CSI output by different encoding models among the plurality of encoding models is different.

4. The method of any one of claims 1 to 3, wherein the number of feedback bits and/or an encoding model for the first CSI is determined based on complexity of the first CSI.

5. The method of claim 4, wherein the complexity of the first CSI is determined based on at least one of:
subband information in the first CSI, and
recovery accuracy corresponding to the first CSI.

6. The method of claim 5, wherein the subband information in the first CSI comprises an intersubband correlation in the first CSI.

7. The method of claim 6, before sending, by the first device, the first information to the second device, further comprising:
determining, by the first device, autocorrelation coefficients between each pair of subbands among a plurality of subbands in the first CSI;
determining, by the first device, the intersubband correlation for the plurality of subbands based on the autocorrelation coefficients between each pair of subbands among the plurality of subbands in the first CSI; and
determining, by the first device, the number of feedback bits and/or the encoding model for the first CSI based on the intersubband correlation.

8. The method of claim 5, wherein the first device comprises a plurality of encoding models, and the number of feedback bits for CSI output by different encoding models among the plurality of encoding models is different, and
before sending, by the first device, the first information to the second device, the method further comprises:
compressing, by the first device, the first CSI based on the plurality of encoding models to obtain a plurality of pieces of CSI compression information;
inputting, by the first device, the plurality of pieces of CSI compression information into a plurality of decoding models to obtain a plurality of pieces of CSI recovery information, each of the plurality of decoding models corresponding to a respective encoding model; and
determining, by the first device, the number of feedback bits and/or the encoding model for the first CSI, based on the plurality of pieces of CSI recovery information.

9. The method of any one of claims 1 to 8, further comprising:
receiving, by the first device, second information from the second device, the second information being used for determining the number of feedback bits and/or an encoding model for the first CSI.

10. The method of claim 9, wherein the second information indicates a reference value of recovery accuracy corresponding to CSI.

11. The method of claim 9 or 10, wherein the second information is carried in one of:
a Radio Resource Control (RRC) signaling,
a Medium Access Control Control Element (MAC CE), and
Downlink Control Information (DCI).

12. The method of any one of claims 1 to 11, wherein the first information comprises at least one of:
numerical information of the number of feedback bits,
level information of the number of feedback bits,
indication information for an encoding model for the first CSI, and
indication information for a decoding model for the first CSI.

13. The method of any one of claims 1 to 12, before sending, by the first device, the first information to the second device, further comprising:
receiving, by the first device, a model parameter from the second device, wherein the model parameter comprises at least one of:
a model parameter for an encoding model for CSI, and
a model parameter for a decoding model for the CSI.

14. The method of any one of claims 1 to 12, before sending, by the first device, the first information to the second device, further comprising:
sending, by the first device, a model parameter to the second device, wherein the model parameter comprises a model parameter for a decoding model for CSI.

15. The method of any one of claims 1 to 13, further comprising:
updating, by the first device, a first encoding model based on the first CSI.

16. The method of any one of claims 1 to 15, wherein the first information is carried in Uplink Control Information (UCI).

17. The method of any one of claims 1 to 16, wherein the first device is a terminal device, and the second device is a network device.

18. A method for wireless communication, comprising:
receiving, by a second device, first information from a first device, the first information indicating the number of feedback bits for first Channel State Information (CSI).

19. The method of claim 18, wherein the first device comprises at least one encoding model, an encoding model for the first CSI is a first encoding model among the at least one encoding model.

20. The method of claim 19, wherein the first device comprises a plurality of encoding models, and the number of feedback bits for CSI output by different encoding models among the plurality of encoding models is different.

21. The method of any one of claims 18 to 20, wherein the number of feedback bits and/or an encoding model for the first CSI is determined based on complexity of the first CSI.

22. The method of claim 21, wherein the complexity of the first CSI is determined based on at least one of:
subband information in the first CSI, and
recovery accuracy corresponding to the first CSI.

23. The method of claim 22, wherein the subband information in the first CSI comprises an intersubband correlation in the first CSI.

24. The method of any one of claims 18 to 23, further comprising:
sending, by the second device, second information to the first device, the second information being used for determining the number of feedback bits and/or an encoding model for the first CSI.

25. The method of claim 24, wherein the second information indicates a reference value of recovery accuracy corresponding to CSI.

26. The method of claim 24 or 25, wherein the second information is carried in one of:
a Radio Resource Control (RRC) signaling,
a Medium Access Control Control Element (MAC CE), and
Downlink Control Information (DCI).

27. The method of any one of claims 18 to 26, wherein the first information comprises at least one of:
numerical information of the number of feedback bits,
level information of the number of feedback bits,
indication information for an encoding model for the first CSI, and
indication information for a decoding model for the first CSI.

28. The method of any one of claims 18 to 27, before receiving, by the second device, the first information from the second device, further comprising:
sending, by the second device, a model parameter to the first device, wherein the model parameter comprises at least one of:
a model parameter for an encoding model for CSI, and
a model parameter for a decoding model for the CSI.

29. The method of any one of claims 18 to 27, before receiving, by the second device, the first information from the second device, further comprising:
receiving, by the second device, a model parameter from the first device, wherein the model parameter comprises a model parameter for a decoding model for CSI.

30. The method of any one of claims 18 to 29, wherein the first information the first information is carried in Uplink Control Information (UCI).

31. The method of any one of claims 18 to 30, wherein the first device is a terminal device, and the second device is a network device.

32. A communication apparatus, the communication apparatus being a first device, and comprising:
a sending unit, configured to send first information to a second device, the first information indicating the number of feedback bits for first Channel State Information (CSI).

33. The communication apparatus of claim 32, wherein the first device comprises at least one encoding model, an encoding model for the first CSI is a first encoding model among the at least one encoding model.

34. The communication apparatus of claim 33, wherein the first device comprises a plurality of encoding models, and the number of feedback bits for CSI output by different encoding models among the plurality of encoding models is different.

35. The communication apparatus of any one of claims 32 to 34, wherein the number of feedback bits and/or an encoding model for the first CSI is determined based on complexity of the first CSI.

36. The communication apparatus of claim 35, wherein the complexity of the first CSI is determined based on at least one of:
subband information in the first CSI, and
recovery accuracy corresponding to the first CSI.

37. The communication apparatus of claim 36, wherein the subband information in the first CSI comprises an intersubband correlation in the first CSI.

38. The communication apparatus of claim 37, further comprising:
a first processing unit, configured to:
determine autocorrelation coefficients between each pair of subbands among a plurality of subbands in the first CSI;
determine the intersubband correlation for the plurality of subbands based on the autocorrelation coefficients between each pair of subbands among the plurality of subbands in the first CSI; and
determine the number of feedback bits and/or the encoding model for the first CSI based on the intersubband correlation.

39. The communication apparatus of claim 36, wherein the first device comprises a plurality of encoding models, and the number of feedback bits for CSI output by different encoding models among the plurality of encoding models is different, and the communication apparatus further comprises a second processing unit configured to:
compress the first CSI based on the plurality of encoding models to obtain a plurality of pieces of CSI compression information;
input the plurality of pieces of CSI compression information into a plurality of decoding models to obtain a plurality of pieces of CSI recovery information, each of the plurality of decoding models corresponding to a respective encoding model; and
determine the number of feedback bits and/or the encoding model for the first CSI, based on the plurality of pieces of CSI recovery information.

40. The communication apparatus of any one of claims 32 to 39, further comprising:
a first receiving unit, configured to receive second information from the second device, the second information being used for determining the number of feedback bits and/or an encoding model for the first CSI.

41. The communication apparatus of claim 40, wherein the second information indicates a reference value of recovery accuracy corresponding to CSI.

42. The communication apparatus of claim 40 or 41, wherein the second information is carried in one of:
a Radio Resource Control (RRC) signaling,
a Medium Access Control Control Element (MAC CE), and
Downlink Control Information (DCI).

43. The communication apparatus of any one of claims 32 to 42, wherein the first information comprises at least one of:
numerical information of the number of feedback bits,
level information of the number of feedback bits,
indication information for an encoding model for the first CSI, and
indication information for a decoding model for the first CSI.

44. The communication apparatus of any one of claims 32 to 43, further comprising a second receiving unit, configured to:
receive a model parameter from the second device, wherein the model parameter comprises at least one of:
a model parameter for an encoding model for CSI, and
a model parameter for a decoding model for the CSI.

45. The communication apparatus of any one of claims 32 to 43, wherein the sending unit is further configured to:
send a model parameter to the second device, wherein the model parameter comprises a model parameter for a decoding model for CSI.

46. The communication apparatus of any one of claims 32 to 44, further comprising:
a third processing unit, configured to update a first encoding model based on the first CSI.

47. The communication apparatus of any one of claims 32 to 46, wherein the first information is carried in Uplink Control Information (UCI).

48. The communication apparatus of any one of claims 32 to 47, wherein the first device is a terminal device, and the second device is a network device.

49. A communication apparatus, communication apparatus being a second device, and comprising:
a receiving unit, configured to receive first information from a first device, the first information indicating the number of feedback bits for first Channel State Information (CSI).

50. The communication apparatus of claim 49, wherein the first device comprises at least one encoding model, an encoding model for the first CSI is a first encoding model among the at least one encoding model.

51. The communication apparatus of claim 50, wherein the first device comprises a plurality of encoding models, and the number of feedback bits for CSI output by different encoding models among the plurality of encoding models is different.

52. The communication apparatus of any one of claims 49-51, wherein the number of feedback bits and/or an encoding model for the first CSI is determined based on complexity of the first CSI.

53. The communication apparatus of claim 52, wherein the complexity of the first CSI is determined based on at least one of:
subband information in the first CSI, and
recovery accuracy corresponding to the first CSI.

54. The communication apparatus of claim 53, wherein the subband information in the first CSI comprises an intersubband correlation in the first CSI.

55. The communication apparatus of any one of claims 49 to 54, further comprising: a first sending unit, configured to:
send second information to the first device, the second information being used for determining the number of feedback bits and/or an encoding model for the first CSI.

56. The communication apparatus of claim 55, wherein the second information indicates a reference value of recovery accuracy corresponding to CSI.

57. The communication apparatus of claim 55 or 56, wherein the second information is carried in one of:
a Radio Resource Control (RRC) signaling,
a Medium Access Control Control Element (MAC CE), and
Downlink Control Information (DCI).

58. The communication apparatus of any one of claims 49 to 57, wherein the first information comprises at least one of:
numerical information of the number of feedback bits,
level information of the number of feedback bits,
indication information for an encoding model for the first CSI, and
indication information for a decoding model for the first CSI.

59. The communication apparatus of any one of claims 49 to 58, further comprising a second sending unit, configured to send a model parameter to the first device, wherein the model parameter comprises at least one of:
a model parameter for an encoding model for CSI, and
a model parameter for a decoding model for the CSI.

60. The communication apparatus of any one of claims 49 to 58, wherein the receiving unit is further configured to:
receive a model parameter from the first device, wherein the model parameter comprises a model parameter for a decoding model for CSI.

61. The communication apparatus of any one of claims 49 to 60, wherein the first information the first information is carried in Uplink Control Information (UCI).

62. The communication apparatus of any one of claims 49 to 61, wherein the first device is a terminal device, and the second device is a network device.

63. A communication device, comprising a transceiver, a memory, and a processor, wherein the memory is configured to store a program, and a processor is configured to call the program from the memory and control the transceiver to receive or transmit signals to cause a terminal to perform the method of any one of claims 1 to 62.

64. An apparatus, comprising a processor configured to call a program from a memory to cause the apparatus to perform the method of any one of claims 1 to 62.

65. A chip, comprising a processor configured to call a program from a memory to cause a device equipped with the chip to perform the method of any one of claims 1 to 62.

66. A computer-readable storage medium having stored thereon a program, wherein the program causes a computer to perform the method of any one of claims 1 to 62.

67. A computer program product comprising a program, wherein the program causes a computer to perform the method of any one of claims 1 to 62.

68. A computer program causing a computer to perform the method of any one of claims 1 to 62.
